# EUROPÄISCHE PATENTSCHRIFT

(11) **EP 3 909 903 B1**
(45) Veröffentlichungstag und Bekanntmachung des Hinweises auf die Patenterteilung: **30.11.2022**
(21) Anmeldenummer: 21169795.8
(22) Anmeldetag: 22.04.2021
(51) Int. Cl.: B66C 1/66, F16G 15/08, F16B 45/00, F16G 15/00

(54) **ANSCHLAGPUNKT**
ANCHORAGE POINT
POINT DE BUTÉE

(30) Priorität: 29.04.2020 DE 202020102382 U; 15.06.2020 DE 202020103418 U
(43) Veröffentlichungstag der Anmeldung: 17.11.2021
(73) Patentinhaber: J.D. Theile GmbH & Co. KG, 58239 Schwerte (DE)
(72) Erfinder: Foitzik, Martin, 58239 Schwerte (DE)
(74) Vertreter: Haverkamp Patentanwälte PartG mbB

(56) Entgegenhaltungen:
- EP-A1- 3 033 291
- WO-A1-2016/140673
- DE-U1-202012 103 079
- DE-U1-202019 102 552
- US-A- 2 812 971
- US-B2- 10 207 902

## Beschreibung

Die Erfindung betrifft einen Anschlagpunkt umfassend ein Unterteil mit einem Anschlusselement zum Anschließen des Anschlagpunktes an einen mit diesem festzulegenden oder handzuhabenden Gegenstand und ein gegenüber dem Unterteil um die Längsachse des Anschlusselements drehbares Oberteil.

Derartige Anschlagpunkte werden typischerweise zum Heben von Gegenständen verwendet. Angeschlossen werden die Anschlagpunkte mit ihrem Unterteil durch eine als Schraubbolzen ausgelegte Anschlussschraube an den zu hebenden Gegenstand, wobei zum Heben eines Gegenstandes typischerweise mehrere Anschlagpunkte zum Einhängen eines entsprechenden Hebegeschirrs verwendet werden. Damit sich bei Anliegen einer durch ein in das Ösenteil eingehängtes Hebezeug das Ösenteil entsprechend der darauf wirkenden Zugrichtung ausrichtet, ist das Ösenteil gegenüber der Anschlussschraube drehbar. Dieselben Eigenschaften einer Anschlagöse sind auch gewünscht, wenn diese zum Verzurren eines Gegenstandes eingesetzt wird.

Anschlagpunkte verbleiben typischerweise an dem zu hebenden oder zu verzurrenden Gegenstand nur für die Dauer des Hebens bzw. Festlegens. Daher wird eine solche Anschlagöse mittels einer mit einem Gewindeabschnitt versehenen Anschlussschraube in eine zu diesem Zweck vorgesehene und mit einem komplementären Innengewinde ausgestattete Gewindebohrung des handzuhabenden Gegenstandes eingeschraubt. Wird der Anschlagpunkt nicht mehr benötigt, wird dieser aus dem Gegenstand wieder herausgeschraubt. Somit gehört ein oftmaliges Ein- und Ausschrauben eines solchen Anschlagpunktes zu den typischen, bei seiner Verwendung benötigten Handhabungen. Um diesen Vorgang zu vereinfachen ist in DE 44 03 785 A1 vorgeschlagen worden, an das Ösenteil einen mit dem Kopf des Schraubbolzens kuppelbares Schraubwerkzeug anzuschließen, über das durch das Ösenteil eine Schraubbewegung in die Anschlussschraube einleitbar ist. Dabei ist vorgesehen, dass die Anschlussschraube beispielsweise als Innensechskantschraube ausgebildet ist und das Schraubwerkzeug ein komplementäres Werkzeug umfasst. Das Schraubwerkzeug selbst umfasst zum Anschließen desselben an das Ösenteil und zum Einleiten eines Drehmomentes einen um den Bogen des Ösenteils herumgeführten Bügel. Ist das Sechskantwerkzeug des Schraubwerkzeuges in die Innensechskantausnehmung der Anschlussschraube eingesetzt, ist die Anschlussschraube nach Überwinden des notwendigerweise vorhandenen Spiels zwischen dem Bogen des Ösenteils und dem Bügel drehmomentschlüssig an das Ösenteil angeschlossen. Mithin kann durch eine Drehbewegung des Ösenteils ohne zusätzliches Werkzeug die Anschlussschraube betätigt werden. Um das Schraubwerkzeug an das Ösenteil anzuschließen, verfügt der das Ösenteil einfassende Bügel des Schraubwerkzeuges über eine aufweitbare Öffnung, durch die der Bügel des Ösenteils zum Anschließen des Schraubwerkzeuges an das Ösenteil hindurchgeführt wird. Damit eine Drehmomentübertragung von dem Ösenteil auf die Anschlussschraube nicht nur zum losen Ein- oder Ausschrauben der Anschlussschraube in eine entsprechende Gewindebohrung eines Gegenstandes oder aus dieser heraus, sondern auch ein bestimmungsgemäßes Festlegen der Anschlussschraube und damit des Anschlagpunktes an dem Gegenstand vorgenommen werden kann, muss das Schraubwerkzeug eine hinreichende Stabilität aufweisen. Diesem wirkt in gewisser Weise das notwendige Vorsehen der aufweitbaren Einsetzöffnung im Bereich des Bügels entgegen. Mithin sind an das Schraubwerkzeug gewisse Anforderungen gestellt.

Aus DE 43 36 779 C2 ist ein weiterer Anschlagpunkt bekannt, der ausgelegt ist, damit mit dem Oberteil ein Drehmoment zum Anschließen des Schraubbolzens an einen handzuhabenden Gegenstand in das Unterteil bzw. dessen Schraubbolzen eingebracht werden kann. Das Oberteil dieses Anschlusspunktes verfügt über ein haubenförmiges Anschlussteil, mit dem dieses an das Unterteil angeschlossen ist. Das haubenförmige Anschlussteil erstreckt sich über die gesamte Oberseite des Unterteils, wodurch auch der Schraubenkopf vollständig bedeckt ist. Ein Eintrag von Verunreinigungen an den Schraubenkopf und in das Unterteil ist hierdurch vermieden. In die Innenseite des haubenförmigen Anschlussteils ist eine Innensechskantkontur eingebracht, in die der als Sechskantkopf ausgeführte Schraubenkopf des Schraubenbolzens eintaucht, wenn von dem Oberteil ein Drehmoment auf den Schraubbolzen übertragen werden soll. Das Oberteil ist gegenüber dem Unterteil in axialer Richtung verstellbar. Der drehmomentschlüssige Eingriff des Schraubenkopfes des Schraubbolzens des Unterteils in die Drehmitnahmekontur des Oberteils wird aufgehoben, sobald auf das Oberteil eine Kraft mit einer axial zur Längsachse gerichteten Komponente angreift. Dann wird das Oberteil mit seiner Drehmitnahmekontur von dem Schraubenkopf abgezogen. Wenn der Schraubenkopf vollständig aus der Drehmitnahmekontur des Oberteils herausgebracht ist, ist das Oberteil frei gegenüber dem Unterteil drehbar.

Bei diesem Stand der Technik besteht allerdings nicht die Möglichkeit, mittels eines Werkzeuges auf den Schraubenkopf des Schraubbolzens ein Drehmoment aufzubringen. Bei diesem vorbekannten Anschlagpunkt ist auch seine Handhabung nicht ganz unproblematisch, da besondere Sorgfalt bei Einleiten einer Kraft in den Anschlagpunkt erforderlich ist, vor allem wenn die auf das Oberteil einwirkende Krafteinwirkungsrichtung nicht mit der Drehachse des Anschlagpunktes fluchtet. Bei Kräften, die auf das Oberteil mit einer Querkraftkomponente einwirken, ist das Oberteil regelmäßig bestrebt sich in Richtung der anliegenden Kraft zu drehen. Damit ein unbeabsichtigtes Lösen des Anschlagpunktes von dem handzuhabenden Gegenstand im Falle einer solchen Krafteinleitung in das Oberteil, wenn dieses noch drehmomentschlüssig mit dem Schraubenkopf in Eingriff steht, nicht die Gefahr eines unbeabsichtigten Lösens des Schraubbolzens und damit des Anschlagpunktes von dem handzuhabenden Gegenstand in Kauf genommen werden muss, müssten die Oberteile manuell gegenüber den Unterteilen in ihre Anschlagpunktbenutzungsposition verstellt werden, in der diese dann gegenüber dem Unterteil frei drehbar sind. Dieses ist jedoch aufwendig.

Zur Vermeidung der vorstehend zu DE 43 36 779 C2 beschriebenen Problematik ist ein Anschlagpunkt entwickelt worden, bei dem das Oberteil in axialer Richtung gegenüber dem Unterteil gegen die Rückstellkraft einer Rückstellfeder oder einer Rückstellfederanordnung verstellbar ist, wobei in einer ersten Stellung das Oberteil frei gegenüber dem Unterteil drehbar ist und in einer zweiten Stellung das Oberteil drehbar auf den Schraubenkopf des Schraubbolzens wirkt. Der Schraubbolzen verfügt über eine außenseitige Drehmitnahmekontur, insbesondere eine sechseckig ausgeführte Drehmitnahmekontur. Das Oberteil trägt im Bereich der Wurzel seiner beiden Ösenschenkel an ihren zueinander weisenden Seiten jeweils einen davon abragenden Drehmitnahmenocken. Diese befinden sich, wenn das Oberteil frei gegenüber dem Unterteil drehbar ist, mit axialem Abstand, aus Richtung des Gewindeschaftes des Schraubbolzens gesehen, oberhalb des Schraubenkopfes. Wird das Oberteil in Richtung zum Unterteil gegen die Kraft der Rückstellfeder oder des Rückstellfederpaketes bewegt, wird der Schraubenkopf mit zwei parallelen Drehmitnahmeflächen zwischen die Drehmitnahmenocken des Oberteils gebracht, sodass dann mit dem Drehen des Oberteils das Drehmoment in den Schraubkopf des Schraubbolzens eingekoppelt und dieser somit mitgedreht wird. Ein solcher Anschlagpunkt gemäß dem Oberbegriff des Anspruchs 1 ist aus DE 20 2019 102 552 U1 bekannt.

Auch wenn dieser Anschlagpunkt grundsätzlich den an ihn gestellten mechanischen Anforderungen genügt, wäre es wünschenswert, wenn dieser in Bezug auf die erforderliche Höhe kompakter bauend ausgelegt werden könnte.

Ausgehend von dem diskutierten Stand der Technik liegt der Erfindung daher ausgehend von einem Anschlagpunkt gemäß DE 20 2019 102 552 U1 die Aufgabe zu Grunde, einen Anschlagpunkt vorzuschlagen, der unter Beibehaltung der positiven Eigenschaften dieses vorbekannten Anschlagpunktes hinsichtlich seiner notwendigen Höhe kompakter bauend ausgelegt werden könnte.

Gelöst wird diese Aufgabe erfindungsgemäß durch einen Anschlagpunkt mit den Merkmalen des Anspruchs 1.

Bei diesem Anschlagpunkt trägt das beispielsweise als Schraubbolzen ausgebildete Anschlusselement eine in radialer Richtung abragende Lagerscheibe. Diese ist Teil des Anschlusselements, jedenfalls drehmomentschlüssig an die übrigen Bestandteile desselben angeschlossen. Typischerweise ist die Lagerscheibe an das Anschlusselement angeformt. Diese Drehmitnahmekontur befindet sich an der zum Schaft weisenden Seite der Lagerscheibe, typischerweise mit einem gewissen Abstand von dieser in axialer Richtung beabstandet. Die Drehmitnahmekontur befindet sich vorzugsweise oberhalb des Unterteils, wobei in einem Ausführungsbeispiel die Drehmitnahmekontur an der Oberseite des Unterteils in seinem die Anschlusselementdurchbrechung einfassenden Abschnitt anliegt. Die komplementäre Drehmitnahmekontur des Oberteils befindet sich somit auch unterhalb der Lagerscheibe und daher an der von dem Oberteil wegweisenden Seite derselben. Durch die axiale Bewegbarkeit des Oberteils gegenüber dem Unterteil kann diese mit der Drehmitnahmekontur des Anschlusselements gegen die Rückstellkraft der Rückstellfeder oder des Rückstellfederpaketes in Eingriff gestellt werden. Vorteilhaft bei einer solchen Auslegung eines Anschlagpunktes ist, dass das Anschlusselement grundsätzlich mit Ausnahme seiner Lagerscheibe keinen Kopf, insbesondere keinen mit einer speziellen Geometrie für die Drehmitnahme ausgelegten Kopf ausweisen muss. Selbstverständlich ist es möglich, das Anschlusselement auch mit einem herkömmlichen Schraubkopf auszurüsten, jedoch ist dieses nicht zwingende Voraussetzung für die gewünschte Drehmitnahme zwischen Oberteil und Unterteil. Durch die Anordnung der Drehmitnahmekonturen unterhalb der Lagerscheibe des Anschlusselements können das Unterteil und der ringförmige Grundkörper des Oberteils und damit auch das Oberteil insgesamt mit einer geringeren Höhe ausgelegt werden, was die Möglichkeit einer kompakteren Bauweise des Anschlagpunktes begründet.

Es wird angenommen, dass im Rahmen dieser Ausführungen zum ersten Mal eine Drehmitnahme eines Anschlusselements, wie etwa eines Schraubbolzens durch das Oberteil beschrieben ist, bei dem die Drehmitnahme nicht an oder in einem Schraubenkopf vorgesehen ist. Die Anordnung der komplementären Drehmitnahmekonturen unterhalb der Lagerscheibe erlaubt eine Auslegung des Anschlagpunktes trotz kompakter Bauart mit einer Zweipunktlagerung vom Oberteil gegenüber dem Unterteil, wobei beide Lagerstellen zwischen Oberteil und Unterteil in axialer Richtung des Anschlussglieds nennenswert voneinander beabstandet sind. Die erste Lagerstelle ist die Lagerung der Anschlusselementseitigen Lagerscheibe in bzw. an einer Lagerscheibenlagerung des Oberteils, an dem die Lagerscheibe an ihrer radialen Mantelfläche gelagert ist. Hiervon beabstandet sein kann und ist in einem bevorzugten Ausführungsbeispiel eine zweite Lagerstelle.

Diese in axialer Richtung beabstandete zweite Lagerstelle kann durch einen ringförmigen Lagerfortsatz des Oberteils bereitgestellt werden, welcher Lagerfortsatz die äußere Mantelfläche des Unterteils einfasst. Typischerweise fasst dieser Lagerfortsatz das Unterteil umlaufend ein. Damit kann die Innenwand des ringförmigen Lagerfortsatzes des Oberteils an der Außenwand des Unterteils gelagert sein. Aufgrund einer solchen Zweipunktlagerung, wobei die beiden Lagerstellen axial voneinander beabstandet sind, werden im Falle von auf das beispielsweise als Öse ausgelegte Anschlussmittel des Oberteils einwirkenden Querkräften diese besonders effektiv in das Unterteil und denjenigen Gegenstand abgeleitet, an den der Anschlagpunkt angeschlossen ist. In einem bevorzugten Ausführungsbeispiel ist bezüglich dieser Zweipunktlagerung vorgesehen, dass der Durchmesser des von dem Lagerfortsatz des Oberteils eingefassten Unterteils zumindest im Bereich seines komplementären Lagerabschnittes einen größeren Durchmesser aufweist als der Durchmesser der Lagerscheibe des Anschlusselements. Auf diese Weise ist das Oberteil bei anliegenden Querkräften über eine größere Fläche an dem Unterteil abgestützt, und zwar in unmittelbarer Nachbarschaft zu der Oberfläche des Gegenstandes, an den der Anschlagpunkt angeschlossen ist.

In einer Ausführung eines solchen Anschlagpunktes ist der Schaftabschnitt des Anschlusselements zwischen seiner Drehmitnahmekontur und der Lagerscheibe mit einem größeren Durchmesser konzipiert als in seinem aus dem Unterteil herausragenden, im Falle der Auslegung des Anschlusselements als Schraubbolzen mit einem Außengewinde ausgerüsteten Schaftabschnitt. Infolge dieses im Durchmesser größeren Schaftabschnittes ist das Anschlusselement in seinem bei einer Querlastbeanspruchung des Oberteils besonders beanspruchten Abschnitt stärker ausgeführt und kann auf diese Weise hohen Querkräften standhalten.

Die von dem Schaft des Anschlusselements in radialer Richtung abragende Drehmitnahmekontur kann durch unterschiedliche, in radialer Richtung von diesen vorstehenden Strukturen bereitgestellt sein, solange die Querschnittsfläche des Anschlusselements im Bereich der Drehmitnahmekontur nicht rotationssymmetrisch ist. In einem Ausführungsbeispiel ist vorgesehen, dass das Anschlusselement als Drehmitnahmekontur einen radial abragenden Bund oder ein oder mehrere Bundabschnitte aufweist. Ein solcher Drehmitnahmekonturbund kann bezüglich des Schaftes des Anschlusselements umlaufend ausgeführt sein. Die Umrissgeometrie des Bundes ist nicht rotationssymmetrisch, kann beispielsweise oval oder eckig, typischerweise mit gerundeten Kanten sein. Vorzugsweise wird man die komplementären Drehmitnahmekonturen derart auslegen, dass eine Ineingriffstellung derselben in unterschiedlichen Winkelstellungen von Oberteil und Unterteil zueinander möglich ist, beispielsweise alle 90°. In einem solchen Fall ist bei Vorsehen eines Drehmitnahmekonturbundes an dem Anschlusselement diese mit einer quadratischen Querschnittsfläche ausgeführt, typischerweise mit gerundeten Ecken.

Die Drehmitnahmekontur des Oberteils ist in einem Ausführungsbeispiel durch die entsprechend konturierte Innenwandung eines gegenüber dem radialen Abschluss der Lagerscheibenlagerung nach innen vorspringenden scheibenförmigen Ringkörpers bereitgestellt. Diesem scheibenförmigen Ringkörper kommt eine Doppelfunktion zu, und zwar zum einen dass die radiale Innenwandung dieses Ringkörpers die Drehmitnahmekontur bereitstellt, mit der das Oberteil mit der Drehmitnahmekontur des Anschlusselements in Eingriff gestellt werden kann. Zum anderen dient dieser Ringkörper, der unter die Lagerscheibe greift und damit aus Richtung des Anschlussmittels die Lagerscheibe hintergreift, als Abstützung zum Übertragen einer in axialer Richtung in das Ösenteil eingeleiteten Kraft in das Anschlusselement.

Der Anschlagpunkt kann mit einem als Schraubbolzen ausgeführten Anschlusselement ausgerüstet sein. Gleichermaßen ist es möglich, das Anschlusselement als Innengewindehülse auszulegen. Auch in einem solchen Fall besteht die Möglichkeit, die Innengewindehülse mit einem Schraubkopf auszustatten, der an der von dem Unterteil wegweisenden Seite derselben angeordnet ist, für den Fall, dass ein Werkzeug angelegt werden soll.

Die Rückstellfeder oder die Rückstellfederanordnung befinden sich zwischen dem Oberteil und dem Unterteil. Zum Unterstützen einer Kompaktbauweise in axialer Richtung ist die Rückstellfeder oder die Rückstellfederanordnung vorzugsweise teilweise in einer umlaufenden Nut, typischerweise des Unterteils, angeordnet. Die Rückstellfeder oder die Rückstellfederanordnung ragen nur soweit aus der Nut in Richtung zu dem anderen Teil hinaus, wie dieses für die axiale Bewegbarkeit zwischen Oberteil und Unterteil zum Bewirken der Drehmitnahme erforderlich ist.

In einem bevorzugten Ausführungsbeispiel ist vorgesehen, als Rückstellfeder eine Wellenfeder als Federring einzusetzen, da diese, wenn auf Block gesetzt, nur eine geringe Höhe aufweist und dennoch mit hinreichender Kraft den benötigten Federweg bereitstellt. Dieses unterstützt die gewünschte kompakte Bauweise in axialer Richtung eines solchen Anschlagpunktes.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines ersten erfindungsgemäßen Anschlusspunktes,
- **Fig. 2:**: eine Seitenansicht des Anschlagpunktes der Figur 1,
- **Fig. 3:**: eine Schnittdarstellung des Anschlagpunktes der Figur 2 entlang der Linie A-B mit einer Ausschnittsvergrößerung,

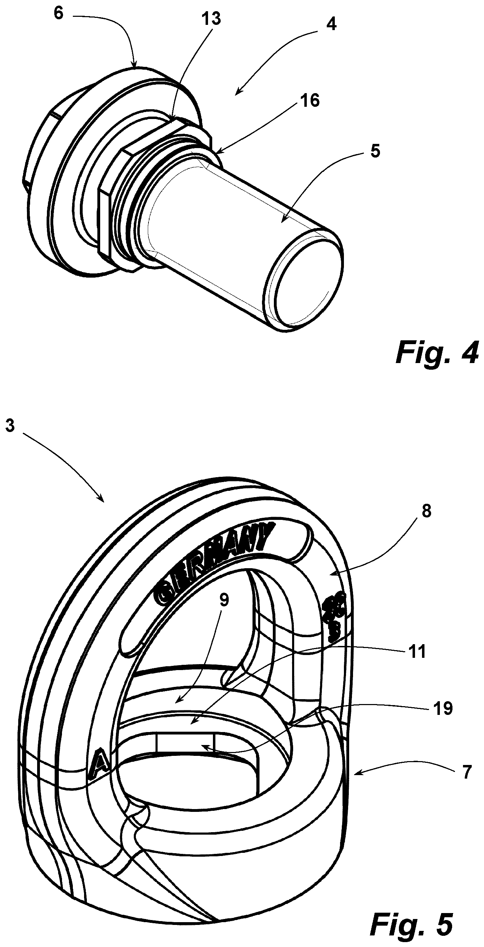

- **Fig. 4:**: eine perspektivische Darstellung des als Anschlusselement verwendeten Schraubbolzens des Anschlagpunktes der vorstehenden Figuren in einer Alleindarstellung,
- **Fig. 5:**: eine perspektivische Ansicht des Oberteils des Anschlagpunktes der Figuren 1 bis 4 in einer Alleindarstellung,
- **Fig. 6:**: eine Querschnittsdarstellung des Anschlagpunktes der Figur 2 entlang der Schnittlinie C-D,

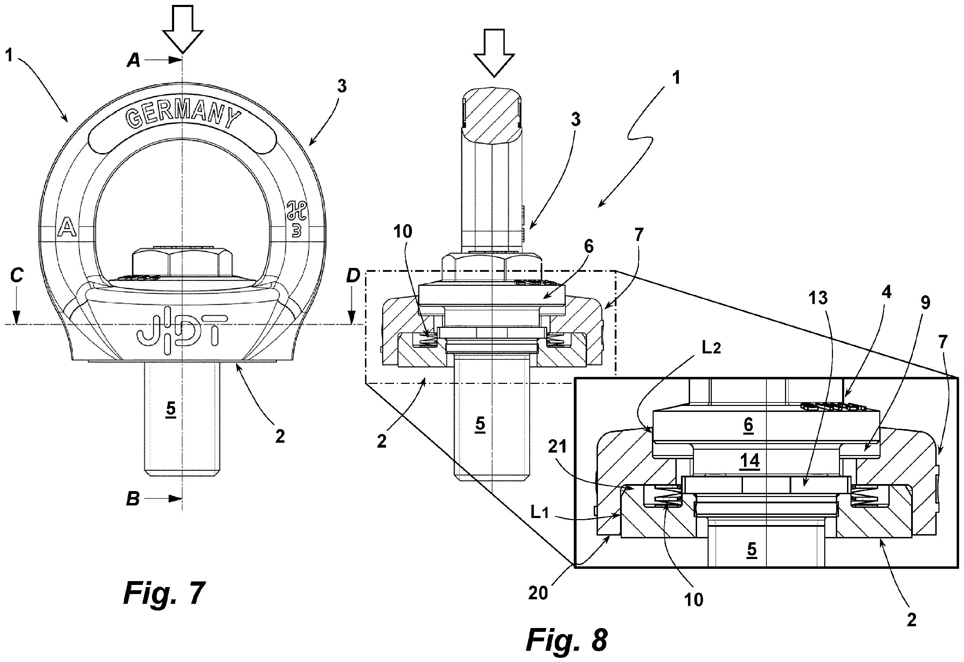

- **Fig. 7:**: eine Seitenansicht des Anschlagpunktes entsprechend derjenigen der Figur 2 mit dem in axialer Richtung gegenüber dem Unterteil verstellten Oberteil,
- **Fig. 8**:: eine Längsschnittdarstellung durch den Anschlagpunkt gemäß Figur 7 entlang der Schnittlinie A-B nebst Ausschnittsvergrößerung,
- **Fig. 9:**: eine Querschnittsdarstellung entsprechend derjenigen der Figur 4 des Anschlagpunktes in seiner in Figur 7 gezeigten Stellung,
- **Fig. 10:**: eine Schnittdarstellung entsprechend derjenigen der Figur 3 des ersten erfindungsgemäßen Ausführungsbeispiels an einem zweiten erfindungsgemäßen Ausführungsbeispiel eines Anschlagpunktes,
- **Fig. 11:**: eine perspektivische Darstellung des als Gewindehülse ausgebildeten Anschlaggliedes des Anschlagpunktes der Figur 10 und
- **Fig. 12:**: eine Querschnittsdarstellung entsprechend derjenigen der Figur 10 mit seinem mit dem Unterteil drehmomentschlüssig ein Eingriff gestellten Oberteil.

Ein Anschlagpunkt 1 dient zum Anschluss an einen Gegenstand, damit dieser gehandhabt werden kann, das heißt: Je nach Anwendung angehoben, festgezurrt oder dergleichen werden kann. Der Anschlagpunkt 1 verfügt über ein Unterteil 2 und ein Oberteil 3. Das Oberteil 3 ist gegenüber dem Unterteil 2 drehbar gelagert. An das Unterteil 2 ist als Anschlusselement zum Anschließen des Anschlagpunktes 1 an einen handzuhabenden oder festzulegenden Gegenstand ein Bolzen 4, der bei dem dargestellten Ausführungsbeispiel als Schraubbolzen ausgeführt ist, angeschlossen. Der Bolzen 4 verfügt über einen Gewindeabschnitt 5. Dieser dient zum Anschließen des Anschlagpunktes 1 an einen handzuhabenden Gegenstand, der zu diesem Zweck mit einer komplementären Innengewindebohrung ausgestattet ist. An den Bolzen 4 ist eine Lagerscheibe 6 angeformt. Das gegenüber dem Unterteil 2 mit seinem Bolzen 4 drehbare Oberteil 3 verfügt über einen ringförmigen Grundkörper 7, an dem als Anschlussmittel zum Anschließen eines Anschlag- oder Zurrmittels bei dem dargestellten Ausführungsbeispiel eine Öse 8 angeformt ist. In den Grundkörper 7 ist eine Lagerscheibenausnehmung 9 als Lagerscheibenlagerung eingebracht. In dieser ist die Lagerscheibe 6 des Bolzens 4 aufgenommen.

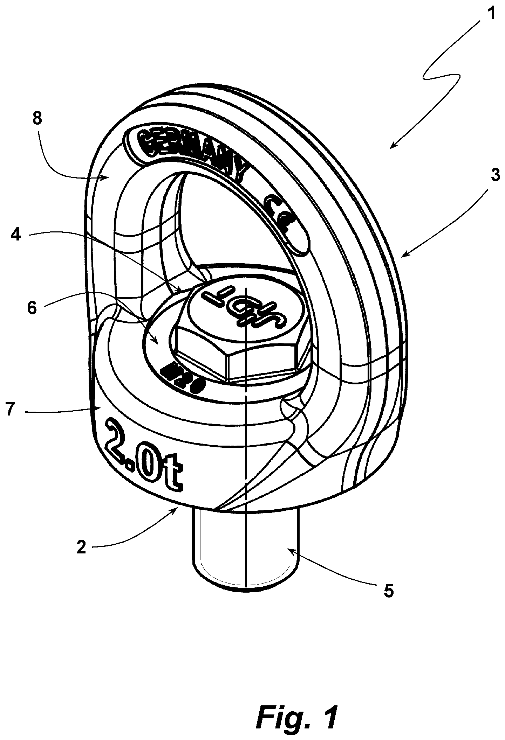

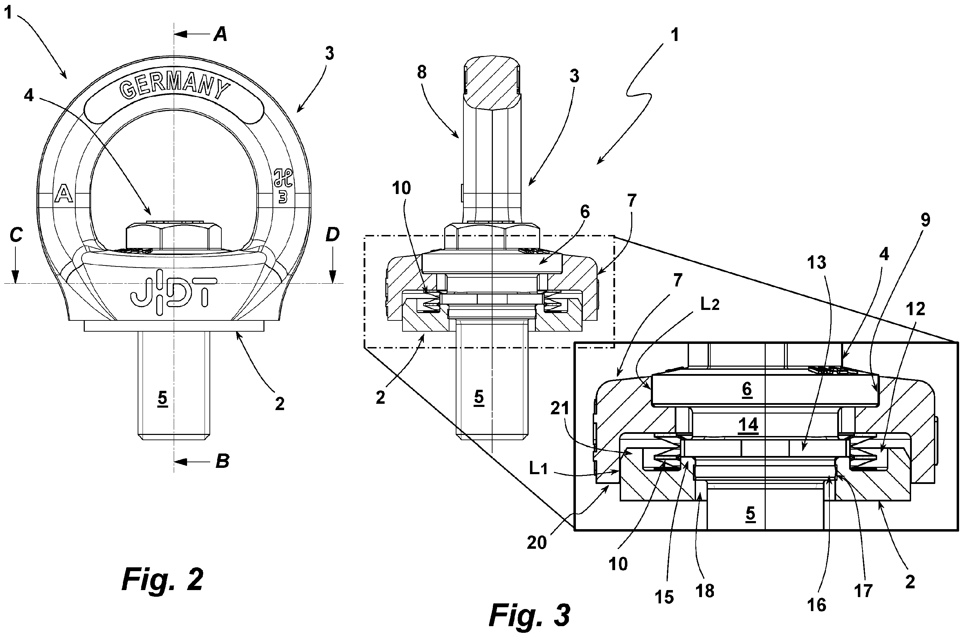

Der Anschlagpunkt 1 ist in den Figuren 1 und 2 in einer ersten Stellung seines Oberteils 3 gegenüber dem Unterteil 2 gezeigt, und zwar in einer Stellung, in der das Oberteil 3 frei gegenüber dem Unterteil 2 drehbar ist, wie dieses für einen Anschlagpunkt bei seinem bestimmungsgemäßen Gebrauch gewünscht ist. Zwischen dem Oberteil 3 und dem Unterteil 2 befindet sich, wie aus der Schnittdarstellung der Figur 3 erkennbar, eine in axialer Richtung wirkende Wellenfeder 10, gegen deren Rückstellkraft das Oberteil 3 in axialer Richtung gegen das Unterteil 2 verstellt werden kann. Der Grundkörper 7 des Oberteils 3 trägt einen in radialer Richtung nach innen vorspringenden scheibenförmigen Ringkörper 11, der sich, wie aus Figur 3 ersichtlich, unter die Lagerscheibe 6 des Bolzens 4 erstreckt. Über den aus Richtung der Öse 8 die Lagerscheibe 6 hintergreifenden Ringkörper 11 wird eine auf die Öse 8 einwirkende Hebekraft auf den Bolzen 4 und damit auf einen an diesen angeschlossenen handzuhabenden Gegenstand übertragen. In der in Figuren 1 bis 3 gezeigten Stellung des Oberteils 3 wirkt der scheibenförmige Ringkörper 11 mit seiner Oberseite gegen die Unterseite der Lagerscheibe 6 und ist in dieser Stellung durch die Wellenfeder 10 gehalten. Zur Aufnahme der Wellenfeder 10 ist in das Unterteil 2 eine umlaufende Nut 12 mit rechteckförmiger Querschnittsgeometrie eingebracht, an dessen Boden die Wellenfeder 10 mit ihrem anderen Ende abgestützt ist.

Der Bolzen 4 trägt zusätzlich zu seiner angeformten Lagerscheibe 6 einen Drehmitnahmekonturbund 13. Der Drehmitnahmekonturbund 13 ist umlaufend nach Art einer Scheibe ausgeführt. Seine radial äußere Umfangs-geometrie ist nicht rotationssymmetrisch und bei dem dargestellten Ausführungsbeispiel quadratisch mit gerundeten Ecken ausgeführt. Der Drehmitnahmekonturbund 13 ist in axialer Richtung von der Lagerscheibe 6 beabstandet und weist einen gegenüber der Lagerscheibe 6 geringeren Maximaldurchmesser auf. Der Bolzenabschnitt 14 zwischen dem Drehmitnahmekonturbund 13 und der Lagerscheibe 6 weist einen größeren Durchmesser auf als der Durchmesser des Gewindeabschnittes 5. Damit ist der Bolzen 4 in seinem Bolzenabschnitt 14 ausgelegt, besonders hohen Scherkräften standzuhalten.

Der Drehmitnahmekonturbund 13 sitzt auf dem zum Oberteil 3 weisenden inneren Schenkel 15 der Nut 12. Gehalten ist der Bolzen 4 an dem Unterteil 3 in axialer Richtung formschlüssig durch einen Verbindungsbund 16 als Teil des Bolzens 4, der in eine komplementäre, in radialer Richtung nach innen offene Verbindungsnut 17 des Unterteils 2 eingreift. Der Verbindungsbund 16 und die Nut 17 sind maßlich so aufeinander abgestimmt, dass der Bolzen 4 mit seinem Verbindungsbund 16 von oben in die Bolzenbohrung 18 des Unterteils 2 eingeschlagen werden kann. Dabei dient der Drehmitnahmekonturbund 13 zugleich als Anschlag zum Begrenzen der Einschlagtiefe. Durch diesen Montagevorgang wird zugleich das Oberteil 3 mit dem Unterteil 2 verbunden.

Die radiale Innenwand 19 des scheibenförmigen Ringkörpers 11 des Oberteils 3 weist eine zu der Außenkontur des Drehmitnahmebundes 13 komplementäre Kontur auf, sodass, wenn beide Drehmitnahmekonturen 13, 19 in Eingriff gestellt sind, von dem Oberteil 3 in den Bolzen 4 ein Drehmoment übertragen werden kann, mithin die beiden Teile drehmomentschlüssig miteinander verbunden sind.

Aufgrund der Ausbildung der Drehmitnahmekontur des Bolzens 4 als umlaufender scheibenförmiger Bund können in diesen hohe Drehmomente eingebracht werden.

Der ringförmige Grundkörper 7 des Oberteils 3 trägt einen sich in axialer Richtung erstreckenden, ringförmigen Lagerfortsatz 20. Der Lagerfortsatz 20 fasst das Unterteil 2 in radialer Richtung außenseitig ein. Die Innenseite des Lagerfortsatzes 20 und die Außenseite des Unterteils 2 sind Zylinderflächen und maßlich so aufeinander abgestimmt, dass die radiale Innenwand des Lagerfortsatzes 20 an der radialen Außenwand des Unterteils 2 gelagert ist. Das Oberteil 3 ist somit an der äußeren Mantelfläche des Unterteils 2 und über die Innenwand seiner Lagerscheibenausnehmung 9 an der radialen Mantelfläche der Lagerscheibe 6 gelagert. Die Lagerung des Oberteils 3 gegenüber dem Unterteil 2 erfolgt somit in zwei Lagerstellen L**₁**, L**₂**, wobei in den Figuren die Lagerstelle L**₁** diejenige zwischen dem Lagerfortsatz 20 und dem Unterteil 2 und die Lagerstelle L**₂** diejenige zwischen der radialen Innenseite der Lagerscheibenlagerung 9 mit der radial äußeren Mantelfläche der Lagerscheibe 6 des Bolzens 4 sind. Aus diesem Grunde kann die Lagerung des Oberteils 3 an bzw. gegenüber dem Unterteil 2 mit seinem Bolzen 4 als Zweipunktlagerung angesprochen werden, wobei die beiden Lagerstellen L**₁**, L**₂** in axialer Richtung voneinander beabstandet sind. Die Beabstandung der beiden Lagerstellen L**₁**, L**₂** erlaubt eine hohe Querkraftaufnahme. Dieser Abstand wird bei dem Anschlagpunkt 1 in geschickter Weise genutzt, um zwischen den beiden Lagerstellen L**₁**, L**₂** die Drehmitnahmekonturen von Unterteil 2 und Oberteil 3 anzuordnen. Dieses bedingt die in axialer Richtung nur geringe benötigte Bauhöhe des Unterteils 2 und des ringförmigen Grundkörpers 7 des Oberteils 3. Dementsprechend wirken über das Oberteil 3 eingeleitete Querkräfte mit entsprechend kleinem Hebel auf den Bolzen 4.

Bei dem dargestellten Ausführungsbeispiel sind die Lager als Gleitlager ausgeführt. Eine Lagerung des Oberteils gegenüber dem Unterteil kann unter Zwischenschaltung von Lagerkörpern, wie Kugeln oder dergleichen vorgesehen sein.

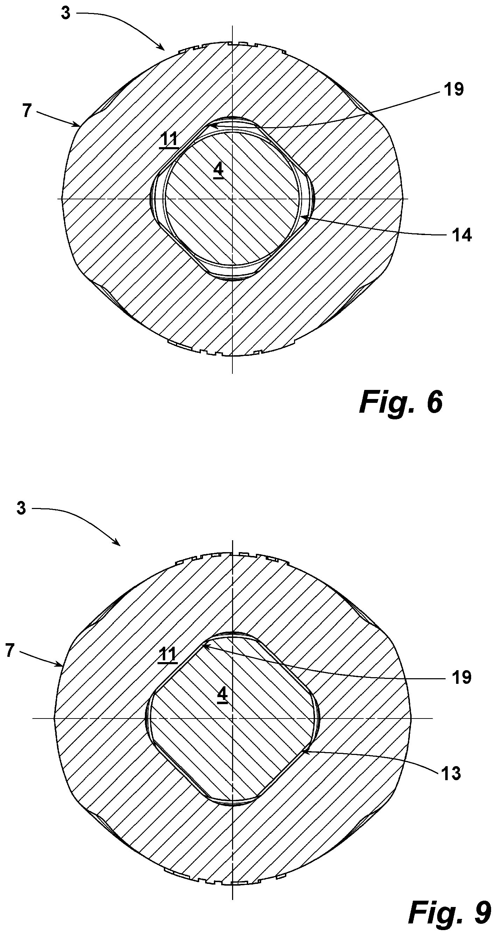

Die Querschnittsdarstellung der Figur 6 zeigt die durch die Innenwand 19 bereitgestellte Drehmitnahmekontur des Oberteils 3. Die Schnittebene befindet sich in der Ebene des Bolzenabschnitts 14 des Bolzens 4. Die durch die Innenwand 19 bereitgestellte Drehmitnahmekontur des Oberteils 3 steht in der Stellung von Oberteil 3 gegenüber dem Unterteil 2 nicht mit derjenigen des Bolzens 4 in Eingriff. Der Anschlagpunkt 1 befindet sich somit in seiner ersten Stellung, in der das Oberteil 3 frei gegenüber dem Unterteil 2 drehbar ist. Um ein Drehmoment von dem Oberteil 3 auf den Bolzen 4 zu übertragen, wird das Oberteil 3, wie durch die Blockpfeile angedeutet, in axialer Richtung in Richtung zum Unterteil 2 gegen die Rückstellkraft der Wellenfeder 10 bewegt. Durch diese Push-Bewegung des Oberteils 3 wird die Innenwand 19 des scheibenförmigen Ringkörpers 11 als Drehmitnahmekontur mit derjenigen des Drehmitnahmekonturbundes 13 des Bolzens 4 in Eingriff gestellt (siehe insbesondere Figur 9). In dieser Stellung kann über das Oberteil 3 ein Drehmoment auf den Bolzen 4 übertragen werden. Diese Stellung von Oberteil 3 zu Unterteil 2 ist durch die Oberseite des äußeren, die Nut 12 begrenzenden Schenkels 21 begrenzt. Wird nach erfolgter Drehmomentübertragung etwa zum Einschrauben des Bolzens 4 mit seinem Gewindeabschnitt 5 in eine komplementäre Innengewindebohrung eines handzuhabenden Gegenstandes das Oberteil 3 losgelassen, wird dieses aufgrund der in der Wellenfeder 10 gespeicherten Energie in ihre gegenüber dem Unterteil 2 frei drehbare Stellung zurück gedrückt ist.

Der Bolzen 4 des dargestellten Ausführungsbeispiels verfügt ebenfalls über einen Sechskantkopf, sodass der Bolzen 4, wenn gewünscht, auch mit einem Schraubenschlüssel betätigt werden kann. Der Durchmesser des Drehmitnahmekonturbundes 13 des Bolzens 4 entspricht in etwa dem Durchmesser des Schraubenkopfes, sodass über diesen in aller Regel dasselbe Drehmoment in den Bolzen 4 eingebracht werden kann. Insofern kann eine bestimmungsgemäße Vorspannung auch ohne die Notwendigkeit eines auf den Schraubenkopf aufzusetzenden Schraubenschlüssels in den Bolzen eingebracht werden, beispielsweise durch Verwenden eines Hebels, der mit einem Abschnitt durch die Öffnung der Öse 8 des Oberteils 3 hindurchgesteckt wird. Allerdings lässt sich dann das Drehmoment nicht, jedenfalls nicht ohne weiteres erfassen. Es versteht sich, dass anstelle des in den Figuren dargestellten Bolzens 4 mit seinem Sechskantkopf der Sechskantkopf auch jedwede andere Drehmitnahmekontur, beispielsweise eine Innendrehmitnahmekontur, wie etwa eine Sechskantdrehmitnahmekontur, vorgesehen sein kann.

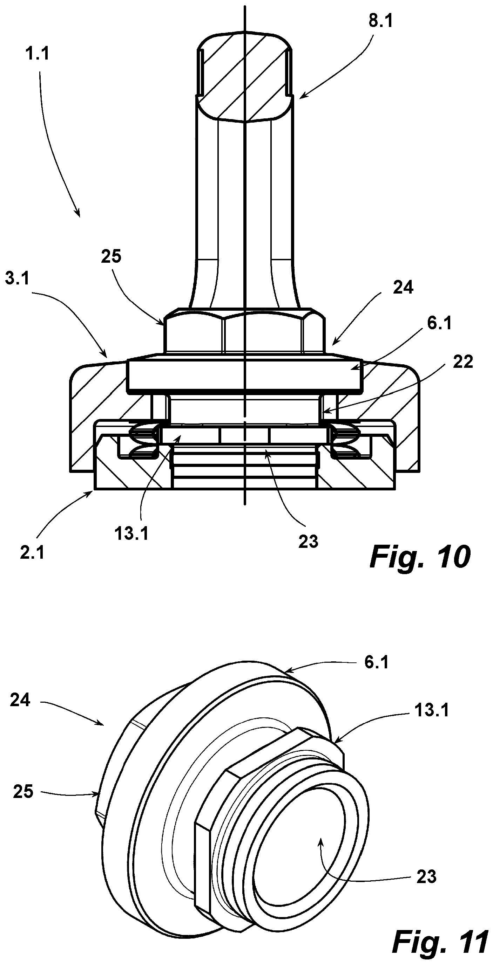

Figur 10 zeigt einen Anschlagpunkt 1.1 gemäß einem weiteren Ausführungsbeispiel. Dieser ist genauso aufgebaut wie der Anschlagpunkt 1 und unterscheidet sich von diesem lediglich durch sein Anschlusselement. In den Figuren 10 bis 12 sind gleiche Merkmale, die auch der Anschlagpunkt 1 der vorstehenden Figuren aufweist, mit denselben Bezugszeichen kenntlich gemacht, ergänzt um den Suffix ".1". Das Anschlusselement ist bei dem Anschlagpunkt 1.1 nicht als Schraubbolzen, sondern als Innengewindehülse ausgebildet. Somit bilden der Schaft 22 und das Innengewinde 23 eine Innengewindehülse 24. Damit dient der Anschlusspunkt 1.1 zum Anschließen an einen handzuhabenden und/oder festzulegenden Gegenstand, von dem ein Gewindeschaft mit komplementärem Gewinde zu dem Innengewinde 23 der Innengewindehülse 24 abragt.

Figur 11 zeigt die Innengewindehülse 24 in einer perspektivischen Ansicht. Deutlich zu erkennen ist sein Drehmitnahmekonturbund 13.1 sowie die davon in axialer Richtung beabstandete Lagerscheibe 6.1. Die Innengewindehülse 24 ist in Richtung zu der Öse 8.1 mit einem Schraubkopf 25 ausgerüstet.

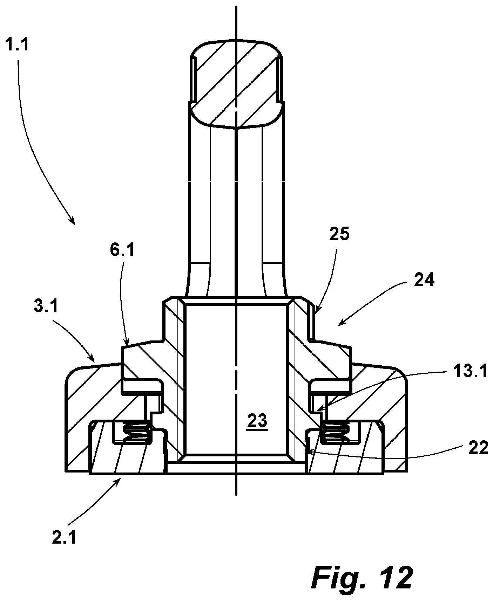

Die Funktionalität des Anschlagpunktes 1.1 entspricht bezüglich der Drehmitnahme des Unterteils 2.1 durch das Oberteil 3.1 exakt derjenigen, wie dieses zu dem Anschlagpunkt 1 beschrieben ist. Figur 10 zeigt das Oberteil 3.1, welches mit dem Drehmitnahmekonturbund 13.1 der Innengewindehülse 24 in Eingriff gestellt ist. Figur 12 zeigt hingegen den Anschlagpunkt 1.1 mit dem drehmomentschlüssig mit dem Unterteil 2.1 in Eingriff gestellten Oberteil 3.1.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umzusetzen, ohne dass diese im Rahmen dieser Ausführungen näher erläutert werden müssten.

### Bezugszeichenliste

- 1, 1.1: Anschlagpunkt
- 2, 2.1: Unterteil
- 3, 3.1: Oberteil
- 4: Bolzen
- 5: Gewindeabschnitt
- 6, 6.1: Lagerscheibe
- 7: Grundkörper
- 8, 8.1: Öse
- 9: Lagerscheibenausnehmung
- 10: Wellenfeder
- 11: Ringkörper
- 12: Nut
- 13, 13.1: Drehmitnahmekonturbund
- 14: Bolzenabschnitt
- 15: Schenkel
- 16: Verbindungsbund
- 17: Verbindungsnut
- 18: Bolzenbohrung
- 19: Innenwand
- 20: Lagerfortsatz
- 21: Schenkel
- 22: Schaft
- 23: Innengewinde
- 24: Innengewindehülse
- 25: Schraubkopf

- L**₁**, L**₂**: Lagerstelle

## Patentansprüche

1. Anschlagpunkt, umfassend ein Unterteil (2, 2.1) mit einem Anschlusselement (4, 24) zum Anschließen des Anschlagpunktes (1, 1.1) an einen mit diesem festzulegenden oder handzuhabenden Gegenstand und ein gegenüber dem Unterteil (2, 2.1) um die Längsachse des Anschlusselements (4, 24) drehbares Oberteil (3, 3.1) mit einem Anschlussmittel (8, 8.1) zum Anschließen eines Anschlag- oder Zurrmittels, welches Oberteil (3, 3.1) in axialer Richtung gegenüber dem Unterteil (2, 2.1) gegen die Rückstellkraft einer Rückstellfeder (10) oder einer Rückstellfederanordnung verstellbar ist, wobei in einer ersten Stellung das Oberteil (3, 3.1) frei gegenüber dem Unterteil (2, 2.1) drehbar ist und in einer zweiten Stellung das Oberteil (3, 3.1) drehmomentschlüssig auf das Anschlusselement (4, 24) wirkt, **dadurch gekennzeichnet, dass**
das Anschlusselement (4, 24) eine in radialer Richtung abragende Lagerscheibe (6, 6.1) trägt und das Oberteil (3, 3.1) eine die Lagerscheibe (6, 6.1) an ihrer radialen Mantelfläche lagernde Lagerscheibenlagerung (9) aufweist und wobei das Anschlusselement (4, 24) eine außenseitige, mit Abstand zu der Lagerscheibe (6, 6.1) in Richtung zu seinem Schaft (5) angeordnete Drehmitnahmekontur (13, 13.1) aufweist und das Oberteil (3, 3.1) eine dazu komplementäre Drehmitnahmekontur (19) trägt, die infolge einer axialen Verstellung des Oberteils (3, 3.1) aus seiner ersten Stellung in seine zweite Stellung mit der Drehmitnahmekontur des Anschlusselements (4, 24) in Eingriff stellbar ist.

2. Anschlagpunkt nach Anspruch 1, **dadurch gekennzeichnet, dass** die Drehmitnahmekontur des Anschlusselements (4, 24) durch einen radial abragenden Bund (13, 13.1) oder Bundabschnitt, demzufolge das Anschlusselement (4, 24) im Bereich seines Bundes (13, 13.1) oder Bundabschnittes eine nicht rotationssymmetrische äußere Mantelfläche aufweist, bereitgestellt ist.

3. Anschlagpunkt nach Anspruch 2, **dadurch gekennzeichnet, dass** die durch den Drehmitnahmekonturbund (13, 13.1) bereitgestellte Drehmitnahmekontur über den Umfang des Anschlusselements (4, 24) gesehen vier mit gleichem Winkelabstand zueinander angeordnete, gleiche Kontursegmente aufweist.

4. Anschlagpunkt nach Anspruch 3, **dadurch gekennzeichnet, dass** die Drehmitnahmekontur im Querschnitt quadratisch mit gerundet ausgeführten Ecken ist.

5. Anschlagpunkt nach einem der Ansprüche 2 bis 4, **dadurch gekennzeichnet, dass** der Drehmitnahmekonturbund (13, 13.1) umlaufend gegenüber der Mantelfläche des Anschlusselements (4, 24) radial abragt.

6. Anschlagpunkt nach einem der Ansprüche 1 bis 5, **dadurch gekennzeichnet, dass** die zu der Drehmitnahmekontur des Anschlusselements (4, 24) komplementäre Drehmitnahmekontur des Oberteils (3, 3.1) durch die Innenwandung (19) eines gegenüber dem radialen Abschluss der Lagerscheibenlagerung (9) nach innen vorspringenden scheibenförmigen Ringkörpers (11) bereitgestellt ist.

7. Anschlagpunkt nach Anspruch 6, **dadurch gekennzeichnet, dass** die Oberseite des scheibenförmigen Ringkörpers (11) in seiner gegenüber dem Unterteil (2, 2.1) frei drehbaren Stellung gegen die Lagerscheibe (6, 6.1) des Anschlusselements (4, 24) wirkt.

8. Anschlagpunkt nach einem der Ansprüche 1 bis 7, **dadurch gekennzeichnet, dass** das Oberteil (3, 3.1) einen sich in axialer Richtung erstreckenden, das Unterteil (2, 2.1) in radialer Richtung einfassenden, insbesondere umlaufenden Lagerfortsatz (20) trägt, dessen Innenwand an der Außenwand des Unterteils (2, 2.1) gelagert ist.

9. Anschlagpunkt nach einem der Ansprüche 6 bis 7, **dadurch gekennzeichnet, dass** an der von der Lagerscheibe (6, 6.1) wegweisenden Seite des scheibenförmigen Ringkörpers (11) die Rückstellfeder (10) oder die Rückstellfederanordnung abgestützt ist.

10. Anschlagpunkt nach einem der Ansprüche 1 bis 9, **dadurch gekennzeichnet, dass** das Unterteil (2, 2.1) eine umlaufende, in axialer Richtung zum Oberteil (3, 3.1) hin offene Nut aufweist, in der die Rückstellfeder (10) oder die Rückstellfederanordnung sitzt.

11. Anschlagpunkt nach Anspruch 10, **dadurch gekennzeichnet, dass** der radiale äußere, die umlaufende Nut (12) begrenzende Schenkel (21) des Unterteils (2, 2.1) mit seinem zu dem Oberteil (3, 3.1) weisenden Abschluss einen Anschlag zum Begrenzen der axialen Bewegbarkeit des Oberteils (3, 3.1) gegenüber dem Unterteil (2, 2.1) bildet.

12. Anschlagpunkt nach einem der Ansprüche 1 bis 11, **dadurch gekennzeichnet, dass** als Rückstellfeder eine Wellenfeder (10) oder ein Wellenfederpaket vorgesehen ist.

13. Anschlagpunkt nach einem der Ansprüche 1 bis 12, **dadurch gekennzeichnet, dass** das Anschlusselement (4, 24) einen radial abragenden Verbindungsbund (16) trägt, der in eine in radialer Richtung nach innen offene Verbindungsnut (17) des Unterteils (3, 3.1) eingreift, durch welchen Eingriff das Anschlusselement (4, 24) in axialer Richtung formschlüssig an das Unterteil (2, 2.1) angeschlossen ist.

14. Anschlagpunkt nach einem der Ansprüche 1 bis 13, **dadurch gekennzeichnet, dass** das Anschlusselement ein Schraubbolzen (4, 24) ist.

15. Anschlagpunkt nach einem der Ansprüche 1 bis 13, **dadurch gekennzeichnet, dass** das Anschlusselement (24) eine Hülse mit einem Innengewinde (23) ist.

16. Anschlagpunkt nach einem der Ansprüche 1 bis 14, **dadurch gekennzeichnet, dass** das Anschlussmittel des Anschlagpunktes (1, 1.1) als Öse (8, 8.1) ausgeführt ist.

## Claims

1. Anchor point, comprising an under part (2, 2.1) with a connection element (4, 24) for connecting the anchor point (1, 1.1) to an object which is to be secured or handled by this, and an upper part (3, 3.1) which can be rotated in relation to the lower part (2, 2.1) about the longitudinal axis of the connection element (4, 24), with a connection means (8, 8.1) for connecting a stop element or lashing means, said upper part (3, 3.1) being adjustable in the axial direction in relation to the lower part (2, 2.1) against the resetting force of a resetting spring (10) or a resetting spring arrangement, wherein, in a first position, the upper part (3, 3.1) is freely rotatable in relation to the lower part (2, 2.1), and, in a second position, the upper part (3, 3.1) takes effect in a torque resistant manner on the connection element (4, 24), **characterised in that**
the connection element (4, 24) carries bearing disks (6, 6.1) projecting in the radial direction, and the upper part (3, 3.1) comprises a bearing disk bearing mounting (9) supporting the bearing disk (6, 6.1) at its radial casing surface, and wherein the connection element (4, 24) comprises a rotational carrying contour (13, 13.1) arranged on the outside and at a distance interval from the bearing disk (6, 6.1) in the direction towards its shaft (5), and the upper part (3, 3.1) carries a rotational carrying contour (19) which is complementary to this, which, as a consequence of an axial movement of the upper part (3, 3.1) out of its first position into its second position, can be moved into engagement with the carrying contour of the connection element (4, 24).

2. Anchor point according to claim 1, **characterised in that** the rotational carrying contour of the connection element (4, 24) is provided by a radially projecting flange (13, 13.1) or flange section, as a consequence of which the connection element (4, 24) comprises, in the region of its flange (13, 13.1) or flange section a non-rotationally symmetrical outer casing surface.

3. Anchor point according to claim 2, **characterised in that** the rotational carrying contour provided by the rotational carrying contour flange (13, 13.1) comprises, seen over the circumference of the connection element (4, 24), four equal contour segments arranged at the same angular distance from one another.

4. Anchor point according to claim 3, **characterised in that** the rotational carrying contour is rectangular in cross-section with rounded corners.

5. Anchor point according to any one of claims 2 to 4, **characterised in that** the rotational carrying contour flange (13, 13.1) circumferentially projects radially in relation to the casing surface of the connection element (4, 24).

6. Anchor point according to any one of claims 1 to 5, **characterised in that** the rotational carrying contour of the upper part (3, 3.1) which is complementary to the rotational carrying contour of the connection element (4, 24) is provided by the inner wall (19) of a disk-shaped ring body (11) which projects inwards in relation to the radial termination of the bearing disk mounting (9).

7. Anchor point according to claim 6, **characterised in that** the upper side of the disk-shaped ring body (11), when in its freely rotatable position in relation to the lower part (2, 2.1) takes effect against the bearing disk (6, 6.1) of the connection element (4, 24).

8. Anchor point according to any one of claims 1 to 7, **characterised in that** the upper part (3, 3.1) carries a bearing extension (20), extending in the axial direction, encompassing the lower part (2, 2.1) in the radial direction, in particular circumferentially, the inner wall of which is mounted at the outer wall of the lower part (2, 2.1).

9. Anchor point according to any one of claims 6 to 7, **characterised in that** the resetting spring (10) or the resetting spring arrangement is supported on the side of the disk-shaped ring body (11) facing away from the bearing disk (6, 6.1).

10. Anchor point according to any one of claims 1 to 9, **characterised in that** the lower part (2, 2.1) comprises a circumferential groove, open towards the upper part (3, 3.1) in the axial direction, in which the resetting spring (10) or the resetting spring arrangement sits.

11. Anchor point according to claim 10, **characterised in that** the radial outer limb (21) of the lower part (2, 2.1), delimiting the circumferential groove (12), forms, with its termination facing towards the upper part (3, 3.1), a stop for delimiting the axial movement capacity of the upper part (3, 3.1) in relation to the lower part (2, 2.1).

12. Anchor point according to any one of claims 1 to 11, **characterised in that** a wave spring (10) or a wave spring package is provided as a resetting spring.

13. Anchor point according to any one of claims 1 to 12, **characterised in that** the connection element (4, 24) carries a radially projecting connecting flange (16), which engages into a connecting groove (17) of the lower part (3, 3.1), open inwards in the radial direction, by means of which engagement the connection element (4, 24) is connected in the axial direction in positive fit to the lower part (2, 2.1).

14. Anchor point according to any one of claims 1 to 13, **characterised in that** the connection element is a screw bolt (4, 24).

15. Anchor point according to any one of claims 1 to 13, **characterised in that** the connection element (24) is a sleeve with an internal thread (23).

16. Anchor point according to any one of claims 1 to 14, **characterised in that** the connection means of the anchor point (1, 1.1) is configured as an eye (8, 8.1).

## Revendications

1. Point d'ancrage comportant une embase (2, 2.1) avec un élément de raccordement (4, 24), destiné à raccorder le point d'ancrage (1, 1.1) à un objet à solidariser avec ce dernier ou à manutentionner et comportant une pièce supérieure (3, 3.1), rotative par rapport à l'embase (2, 2.1) autour de l'axe longitudinal de l'élément de raccordement (4, 24), avec un moyen de raccordement (8, 8.1) afin de raccorder un moyen d'ancrage ou d'arrimage, laquelle pièce supérieure (3, 3.1) est ajustable dans le sens axial par rapport à l'embase (2, 2.1) contre la force de rappel d'un ressort de rappel (10) ou d'un agencement avec ressort de rappel, la pièce supérieure (3, 3.1) étant, dans une première position, en rotation libre par rapport à l'embase (2, 2.1) et la pièce supérieure (3, 3.1) agissant, dans une seconde position, de manière solidaire en rotation sur l'élément de raccordement (4, 24), **caractérisé en ce que** l'élément de raccordement (4, 24) supporte un disque de palier (6, 6.1) en saillie dans le sens radial et la pièce supérieure (3, 3.1) présente un logement (9) de disque de palier afin de loger le disque de palier (6, 6.1) sur sa surface d'enveloppe radiale et l'élément de raccordement (4, 24) présentant du côté externe, disposé à distance du disque de palier (6, 6.1) en direction de sa tige (5), un contour d'entrainement en rotation (13), et la pièce supérieure (3, 3.1) supportant un contour d'entraînement en rotation (19) complémentaire au précédent, lequel peut être positionné engagé dans le contour d'entraînement en rotation de l'élément de raccordement (4, 24) à la suite d'un déplacement axial de la pièce supérieure (3, 3.1) qui passe de sa première position à sa seconde position.

2. Point d'ancrage selon la revendication 1, **caractérisé en ce que** le contour d'entraînement en rotation de l'élément de raccordement (4, 24) est mis à disposition par un épaulement (13, 13.1) en saillie radiale ou un tronçon à épaulement, qui a pour conséquence que l'élément de raccordement (4, 24) présente dans la zone de son épaulement (13, 13.1) ou de son tronçon à épaulement une surface d'enveloppe extérieure non symétrique en rotation.

3. Point d'ancrage selon la revendication 2, **caractérisé en ce que** le contour d'entraînement en rotation mis à disposition par l'épaulement à contour d'entraînement en rotation (13, 13.1) présente, en considérant la circonférence de l'élément de raccordement (4, 24), quatre segments de contour identiques, disposés selon le même écart angulaire les uns par rapport aux autres.

4. Point d'ancrage selon la revendication 3, **caractérisé en ce que** le contour d'entraînement en rotation présente une section carrée avec des angles conformés en arrondi.

5. Point d'ancrage selon l'une des revendications 2 à 4, **caractérisé en ce que** l'épaulement à contour d'entraînement en rotation (13, 13.1) est, par sa circonférence, en saillie radiale par rapport à la surface d'enveloppe de l'élément de raccordement (4, 24).

6. Point d'ancrage selon l'une des revendications 1 à 5, **caractérisé en ce que** le contour d'entraînement en rotation de la pièce supérieure (3, 3.1), lequel est complémentaire au contour d'entraînement en rotation de l'élément de raccordement (4, 24), est mis à disposition par la paroi interne (19) d'un corps annulaire (11) en forme de disque en saillie vers l'intérieur par rapport à la terminaison radiale du logement (9) de disque de palier.

7. Point d'ancrage selon la revendication 6, **caractérisé en ce que** la face supérieure du corps annulaire (11) en forme de disque agit, dans sa position en rotation libre par rapport à l'embase (2, 2.1), contre le disque de palier (6, 6.1) de l'élément de raccordement (4, 24).

8. Point d'ancrage selon l'une des revendications 1 à 7, **caractérisé en ce que** la pièce supérieure (3, 3.1) supporte un prolongement d'appui (20) notamment circonférentiel, s'étendant dans le sens axial, enserrant l'embase (2, 2.1) dans le sens radial, dont la paroi interne est logée sur la paroi externe de l'embase (2, 2.1).

9. Point d'ancrage selon l'une des revendications 6 à 7, **caractérisé en ce que** le ressort de rappel (10) ou l'agencement à ressort de rappel est en appui sur la face du corps annulaire (11) en forme de disque, laquelle est opposée au disque de palier (6, 6.1).

10. Point d'ancrage selon l'une des revendications 1 à 9, **caractérisé en ce que** l'embase (2, 2.1) présente une rainure circonférentielle ouverte dans le sens axial vers la pièce supérieure (3, 3.1), dans laquelle est logé le ressort de rappel (10) ou un agencement à ressort de rappel.

11. Point d'ancrage selon la revendication 10, **caractérisé en ce que** le montant (21) radial externe de l'embase (2, 2.1), lequel délimite la rainure (12) circonférentielle, forme, avec sa terminaison orientée vers la pièce supérieure (3, 3.1), une butée pour limiter la mobilité axiale de la pièce supérieure (3, 3.1) par rapport à l'embase (2, 2.1).

12. Point d'ancrage selon l'une des revendications 1 à 11, **caractérisé en ce qu'un** ressort ondulé (10) ou un bloc de ressorts ondulés est prévu en tant que ressort de rappel.

13. Point d'ancrage selon l'une des revendications 1 à 12, **caractérisé en ce que** l'élément de raccordement (4, 24) supporte un épaulement de liaison (16) en saillie radiale qui s'engage dans une rainure de jonction (17) de l'embase (3, 3.1), ouverte vers l'intérieur dans le sens radial, lequel engagement permettant de raccorder par complémentarité de forme, dans le sens axial, l'élément de raccordement (4, 24) à l'embase (2, 2.1).

14. Point d'ancrage selon l'une des revendications 1 à 13, **caractérisé en ce que** l'élément de raccordement est un boulon fileté (4, 24).

15. Point d'ancrage selon l'une des revendications 1 à 13, **caractérisé en ce que** l'élément de raccordement (24) est une douille munie d'un filetage intérieur (23).

16. Point d'ancrage selon l'une des revendications 1 à 14, **caractérisé en ce que** l'élément de raccordement du point d'ancrage (1, 1.1) est conformé en œillet (8, 8.1).
